# FASCICULE DE BREVET EUROPEEN

(11) **EP 3 622 188 B1**
(45) Date de publication et mention de la délivrance du brevet: **08.09.2021**
(21) Numéro de dépôt: 18749460.4
(22) Date de dépôt: 03.07.2018
(51) Int. Cl.: F16C 11/02, F16J 1/16, F16C 9/04, F16C 33/04, F16C 33/10

(54) **SYSTÈME MÉCANIQUE COMPRENANT UN AXE COUPLÉ A UN PALIER, ET PROCÉDÉ DE FABRICATION D'UN TEL SYSTÈME**
MECHANISCHES SYSTEM MIT EINER MIT EINEM LAGER GEKOPPELTEN WELLE UND VERFAHREN ZUR HERSTELLUNG EINES SOLCHEN SYSTEMS
MECHANICAL SYSTEM COMPRISING A SHAFT COUPLED TO A BEARING, AND METHOD FOR MANUFACTURING SUCH A SYSTEM

(30) Priorité: 03.07.2017 FR 1756265; 19.07.2017 FR 1756841
(43) Date de publication de la demande: 18.03.2020
(73) Titulaire: H.E.F., 42160 Andrézieux-Bouthéon (FR)
(72) Inventeur: DIEW, Mohamadou Bocar, 45200 Amilly (FR); GACHON, Yves René Alexis, 42170 Saint-Just-Saint-Rambert (FR); PROST, Fabrice, 42000 Saint-Etienne (FR)
(74) Mandataire: Cabinet Laurent & Charras
(86) Numéro de dépôt international: PCT/FR2018/051649
(87) Numéro de publication internationale: WO 2019/008266

(56) Documents cités:
- EP-A1- 1 411 145
- EP-A1- 2 290 119
- WO-A1-2008/072548
- WO-A1-2016/001021
- FR-A1- 2 974 399
- FR-A1- 3 013 792
- US-A1- 2003 128 903
- US-A1- 2017 081 522
- US-B2- 7 318 847

## Description

La présente invention concerne un système mécanique comprenant un axe couplé à un palier recevant ledit axe, équipant notamment un moteur thermique. L'invention concerne également un procédé de fabrication d'un tel système.

Le domaine de l'invention est celui des systèmes mécaniques de fixation d'un axe effectuant un mouvement rotationnel ou oscillatoire. A titre d'exemple non limitatif, l'invention se rapporte aux systèmes axe - palier équipant les moteurs thermiques, notamment dans le secteur automobile, tels que les systèmes comprenant un axe de piston ou un axe de culbuteur.

Le problème principal observé sur ce type de tribosystème, soumis à des sollicitations sévères et répétées, concerne les phénomènes de dégradation des surfaces de contact entre le palier et l'axe le traversant.

De manière classique, un axe de piston est réalisé en acier, avec une faible rugosité de surface et un revêtement de DLC (« diamond like carbon » en anglais), tandis que l'alésage du palier est éventuellement équipé d'une bague en alliage cuivreux. En alternative, l'alésage du palier peut être réalisé en acier ou en alliage aluminium, ou en matériau composite.

Pour l'axe, les dégradations des surfaces se concrétisent par une usure douce du revêtement qui peut potentiellement dégénérer en grippage. Pour le palier, la dégradation se concrétise par une usure qui conduit à une augmentation du jeu entre les pièces.

Lorsque le jeu devient excessif, le moteur devient bruyant et son fonctionnement fini par être dégradé. Ainsi, il est important que les deux surfaces antagonistes ne s'usent pas, afin que le revêtement anti-grippage joue son rôle et que les jeux soient préservés.

Pour préserver les jeux, une des difficultés vient du fait que le revêtement anti-grippage est plus dur que le palier en matériau métallique, nettement plus mou. Une contrainte industrielle connue pour remédier à ce problème est de minimiser la composante en pic de la rugosité qui peut être qualifiée par le paramètre RPk. Dans l'état de l'art, le revêtement anti-grippage doit avoir un RPk inférieur à 0,08 µm.

A ce jour, la dégradation des revêtements type DLC sur les axes n'est pas complétement solutionnée.

Pour favoriser la lubrification, il est connu de réaliser dans l'alésage des usinages macroscopiques ayant une fonction de réservoir de lubrifiant, généralement de l'huile. Cela permet d'assurer un apport suffisant d'huile, afin de dissiper les calories générées par friction à l'interface de contact entre l'axe et l'alésage.

Par ailleurs, des structurations de surfaces micrométriques peuvent être utilisées pour piéger les débris générés à l'interface de contact. Cela permet de limiter l'usure abrasive liée aux particules provenant de la surface de l'axe ou du palier.

EP1411145 décrit un exemple d'axe comportant un revêtement de surface anti-grippage. Ce document décrit une rugosité de surface comportant des crêtes et creux, qui sont reliés les uns des autres. Autrement dit, ce document ne décrit pas une microtexturation constituée par un ensemble de microcavités séparées.

US2003/128903 décrit un système mécanique comprenant deux éléments glissants, tels qu'un palier et un axe couplé au palier, équipant un moteur thermique. A titre d'exemples, le palier peut être réalisé en alliage de CuPb, AlSiSn, ou similaire. Au moins l'un des éléments glissants comporte une microtexturation constituée par un ensemble de microcavités séparées. Le seul exemple de revêtement mentionné dans ce document est le MoS2, en précisant que l'utilisation d'un tel revêtement est coûteuse et ne permet pas d'obtenir une durabilité suffisante du fait de son usure. Ce document ne considère pas l'utilisation d'un revêtement comme une solution satisfaisante, et recherche une alternative avec les microcavités.

FR2974399 décrit un autre exemple de système mécanique équipant un moteur thermique, et comprenant un axe de piston articulé sur une bielle de vilebrequin. L'axe de piston est pourvu d'un revêtement type DLC et d'une texturation de surface, comprenant un sillon formant un canal de drainage de lubrifiant, et un ensemble de stries croisées. Une telle texturation est complexe et donc coûteuse à réaliser. De plus, ce document ne présente aucun essai démontrant les performances obtenues, ni aucune valeur numérique relative au dimensionnement de la texturation.

WO2007/031160 décrit un autre exemple de système mécanique équipant un moteur thermique, et comprenant deux éléments dont les surfaces de contact frottent l'une contre l'autre. Le premier élément peut être un tourillon de vilebrequin ou bien un axe de piston, tandis que le second élément est un alésage de bielle.

De préférence, l'un des éléments comporte un revêtement de surface ayant des propriétés de lubrification à sec, tandis que l'autre élément comporte des cavités prévues pour recevoir des débris du revêtement et/ou du lubrifiant liquide additionnel. Selon un mode de réalisation particulier, les deux éléments comportent des cavités.

Une fois encore, ce document ne présente aucun essai démontrant les performances obtenues. En outre, ce document ne mentionne pas précisément les caractéristiques dimensionnelles des cavités, permettant d'obtenir des performances satisfaisantes en service.

Ainsi, les solutions ci-dessus présentent une efficacité qui n'est pas démontrée pour l'application considérée. En outre, ces solutions peuvent présenter des coûts de réalisation importants.

Le but de la présente invention est de proposer une solution satisfaisante en matière de résistance au grippage et à l'usure.

A cet effet, l'invention a pour objet un système mécanique comprenant un palier et un axe couplé au palier, équipant notamment un moteur thermique, le système mécanique étant soumis à des pressions de contact moyennes inférieures à 200 MPa, caractérisé en ce que l'axe comporte au moins une zone pourvue :
- d'un revêtement de surface anti-grippage, présentant une dureté de surface au moins deux fois supérieure à celle du palier, et
- d'une microtexturation constituée par un ensemble de microcavités séparées, réparties dans ladite zone.

Selon d'autres caractéristiques avantageuses de l'invention, prises isolément ou en combinaison :
- Le revêtement de surface anti-grippage de l'axe présente une dureté de surface au moins trois fois supérieure à celle du palier.
- Le revêtement de surface anti-grippage de l'axe présente une dureté de surface au moins six fois supérieure à celle du palier.
- Chacune des microcavités présente une plus grande longueur comprise entre 15 et 100 micromètres, et une profondeur comprise entre 50 nm et 100 µm. Ainsi, la profondeur des microcavités peut être sélectivement supérieure ou inférieure à l'épaisseur du revêtement de surface.
- Chacune des microcavités présente un rapport de forme inférieur ou égal à 1, défini comme le ratio entre la profondeur et la plus grande longueur.
- Les microcavités sont réparties dans ladite zone avec une densité surfacique comprise entre 5 et 30%, cette densité surfacique étant définie comme le ratio de l'aire totale des microcavités sur l'aire totale de ladite zone incluant ces microcavités.
- La profondeur des microcavités externes est inférieure à l'épaisseur du revêtement de surface. Autrement dit, les microcavités externes sont confinées à l'épaisseur du revêtement.
- La profondeur des microcavités externes est supérieure à l'épaisseur du revêtement de surface. Autrement dit, les microcavités externes peuvent pénétrer dans le matériau de base de l'axe, sous le revêtement.
- L'ensemble de microcavités présente une même géométrie, avec des dimensions similaires (profondeur et longueur ou diamètre). En pratique, le degré de similarité entre les dimensions des microcavités dépend de la précision du procédé de microtexturation mis en oeuvre. Dans le cadre de l'invention, on considère que les microcavités ont des dimensions similaires lorsque les variations dimensionnelles restent comprises entre le double (X2 = +100%) et la moitié (divisé par 2 = -50%) des dimensions moyennes des microcavités. A titre d'exemple, cette définition exclut les variations dimensionnelles de l'ordre de la décimale supérieure (X10 = +900%) ou inférieure (divisé par 10 = -90%).
- L'ensemble de microcavités comprend au moins : un premier type de microcavités présentant une première géométrie ; et un second type de microcavités présentant une seconde géométrie différente de la première géométrie, avec des formes et/ou des dimensions différentes. Les formes correspondent notamment aux différentes sections : circulaire, elliptique, rectangulaire, triangulaire, etc. Dans le cadre de l'invention, on considère que les microcavités du second type ont des dimensions différentes lorsque leurs dimensions sont supérieures au double (X2 = +100%) ou inférieures à la moitié (divisé par 2 = -50%) des dimensions moyennes des microcavités du premier type.
- Les microcavités sont réparties dans ladite zone selon un motif prédéterminé de manière à former un réseau rectangulaire, carré, triangulaire ou hexagonal de microcavités en surface du matériau. Les espacements entre le centre d'une microcavité et les centres des microcavités voisines au sein d'un même motif sont compris entre 1 et 10 fois la valeur d'une des dimensions longitudinales (longueur ou diamètre) des microcavités.
- Les microcavités sont réparties dans ladite zone selon un motif aléatoire. Les espacements entre le centre d'une microcavité et les centres des microcavités voisines sont compris aléatoirement entre 0,1 et 10 fois la valeur d'une des dimensions longitudinales des microcavités.
- L'axe a une surface externe cylindrique entièrement couverte par le revêtement de surface et la microtexturation.
- L'axe a une surface externe cylindrique comprenant une unique zone localisée couverte par le revêtement de surface et la microtexturation, cette zone couvrant au moins partiellement la portion de surface destinée à être sollicitée en frottement contre le palier.
- L'axe a une surface externe cylindrique comprenant plusieurs zones distinctes couvertes par le revêtement de surface et la microtexturation, ces zones couvrant au moins partiellement la portion de surface destinée à être sollicitée en frottement contre le palier.
- Le revêtement de surface anti-grippage présente une dureté de surface au moins deux fois supérieure à celle de l'axe.
- Le revêtement de surface anti-grippage est en carbone amorphe type DLC.
- Le revêtement de surface anti-grippage est du type nitrure (CrN, MoN,...).
- Le revêtement de surface anti-grippage est du type carbure (CrC, SiC,...).
- L'axe est un axe de piston, logé dans un piston et dans un palier appartenant à une bielle de vilebrequin.
- L'axe est un axe de culbuteur logé dans un palier appartenant à un culbuteur.
- L'axe est un tourillon logé dans un palier de ligne.
- L'axe est un maneton logé dans un palier de tête de bielle.
- Le palier de ligne / le palier de tête de bielle peut être équipés de coussinets.
- Le palier peut être en acier, en cuivre ou alliage de cuivre, en aluminium ou alliage d'aluminium, en matériaux composites, etc.

L'invention a également pour objet un procédé de fabrication d'un système mécanique tel que mentionné ci-dessus, caractérisé en ce qu'il comprend :
- une étape de revêtement consistant à appliquer le revêtement de surface anti-grippage dans ladite zone de l'axe, et
- une étape de microtexturation consistant à former l'ensemble de microcavités dans ladite zone.

Selon différents modes de réalisation d'un tel procédé :
- L'étape de revêtement est réalisée avant l'étape de microtexturation.
- L'étape de microtexturation est réalisée avant l'étape de revêtement.
- Le revêtement de surface est appliqué uniquement dans ladite zone.
- La microtexturation est appliquée uniquement dans ladite zone.
- Le revêtement de surface est appliqué au-delà de ladite zone.
- La microtexturation est appliquée au-delà de ladite zone.
- L'étape de microtexturation est réalisée avec une installation de microtexturation conservant un paramétrage constant. Par exemple, lorsque l'installation de microtexturation est une machine d'ablation laser, on conserve les mêmes paramètres de puissance, de fluence, de fréquence de répétition et de mise en forme du faisceau laser mais aussi de déplacements relatifs entre le faisceau laser et l'axe, de vitesse relative entre le faisceau laser et l'axe et de distance entre la tête et la surface de l'axe.
- L'étape de microtexturation est réalisée avec une installation de microtexturation réglée successivement avec deux paramétrages différents, ou est réalisée successivement avec deux installations de microtexturation présentant des paramétrages différents, de manière à ce que l'ensemble de microcavités comprenne au moins : un premier type de microcavités et un second type de microcavités ayant des géométries différentes.

De manière inattendue, dans le domaine de pressions de contact dans lequel fonctionne le système mécanique comprenant l'axe couplé au palier, à savoir des pressions de contact moyennes inférieures à 200 MPa, la profondeur des microcavités peut être supérieure ou inférieure à l'épaisseur du revêtement sans que cela ne réduise les gains en termes de résistance au grippage et à l'usure présentés dans la suite du document. De même, l'ordre dans lequel sont effectuées les étapes de revêtement et de microtexturation n'a pas d'influence sur le gain de performance apporté par l'invention.

L'invention sera mieux comprise à la lecture de la description qui va suivre, donnée uniquement à titre d'exemple non limitatif et faite en référence aux dessins annexés sur lesquels :
- la figure 1 est une vue en perspective d'un système mécanique conforme à l'invention, comprenant une bielle et un axe de piston conforme à l'invention ;
- la figure 2 est une vue en élévation de l'axe, selon la flèche II à la figure 1 ;
- la figure 3 est une section selon la ligne III-III à la figure 2 ;
- la figure 4 est une vue à plus grande échelle du détail IV à la figure 3 ;
- la figure 5 est une vue analogue à la figure 4, pour un deuxième mode de réalisation de l'invention ;
- la figure 6 est une vue analogue à la figure 4, pour un troisième mode de réalisation de l'invention ;
- les figures 7 et 8 sont des vues analogues aux figures 2 et 3, pour un quatrième mode de réalisation de l'invention ;
- les figures 9 et 10 sont des vues analogues aux figures 2 et 3, pour un cinquième mode de réalisation de l'invention ;
- les figures 11 et 12 sont des vues analogues aux figures 2 et 3, pour un sixième mode de réalisation de l'invention ;
- les figures 13 à 18 sont des vues de détail montrant différentes variantes de réalisation de la microtexturation.

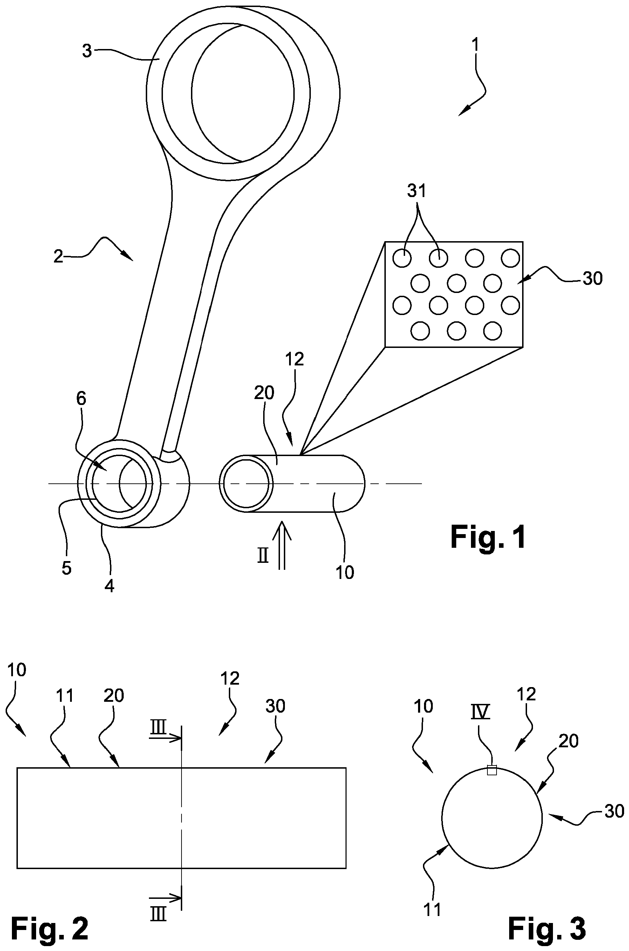

Sur les figures 1 à 4 est représenté un système mécanique 1 conforme à l'invention, conçu pour équiper un moteur thermique de véhicule automobile.

Le système mécanique 1 comprend une bielle 2 et un axe de piston 10, également conforme à l'invention.

La bielle 2 comprend une tête de bielle formant un premier palier 3, et un pied de bielle formant un second palier 4, qui comporte une bague en bronze 5 délimitant un alésage cylindrique 6.

L'axe de piston 10 est prévu pour être monté dans le palier 4, plus précisément dans l'alésage 6 de la bague en bronze 5.

En alternative, le palier 4 peut être dépourvu de bague 5. L'axe 10 est alors directement logé dans l'alésage du palier 4.

L'axe de piston 10 comporte une surface externe cylindrique 11 pourvue d'une couche mince de revêtement 20 anti-grippage en carbone amorphe DLC. En alternative, le revêtement 20 peut être en nitrure de molybdène MoN ou Mo2N, ou tout autre matériau anti-grippage.

Le revêtement 20 constitue un traitement de durcissement superficiel à fonction tribologique. Le revêtement 20 permet d'améliorer la résistance au grippage de l'axe 10, en comparaison avec un axe non traité. Autrement dit, le revêtement 20 a une surface externe 21 présentant une meilleure résistance au grippage que celle de la surface 11.

En outre, le revêtement 20 présente une dureté de surface supérieure à celle de la surface 11 de l'axe 10. De préférence, le revêtement 20 est au moins deux fois plus dur que la surface 11.

Egalement, le revêtement 20 présente une dureté de surface supérieure à celle de l'alésage 6 du palier 4. Selon l'invention, le revêtement 20 est au moins deux fois plus dur que le palier 4.

Ainsi, le revêtement 20 permet d'éviter le grippage de l'axe de piston 10 dans le palier 4 de la bielle 3.

L'axe de piston 10 comporte une sous-couche 18 formée entre la surface 11 et le revêtement 20. A titre d'exemples non limitatifs, la sous-couche 18 peut être composée de chrome ou de nitrure de chrome.

L'axe de piston 10 comporte en outre une microtexturation 30 externe constituée par un ensemble de microcavités 31 (cavités micrométriques) séparées, réparties régulièrement sur la surface 11. La microtexturation 30 est prévue pour réduire la vitesse d'usure de l'axe 10 revêtu et du palier 4. En pratique, réduire la vitesse d'usure constitue un enjeu important pour conserver les propriétés anti-grippage du revêtement 20 et maintenir les jeux entre axe 10 et palier 4, et donc conserver la fonction mécanique.

Les microcavités 31 forment un motif externe discontinu sur la surface 11. Les microcavités 31 présentent une même géométrie, en forme de calotte de section circulaire, délimitant une aire de profondeur décroissante du bord au centre de la calotte.

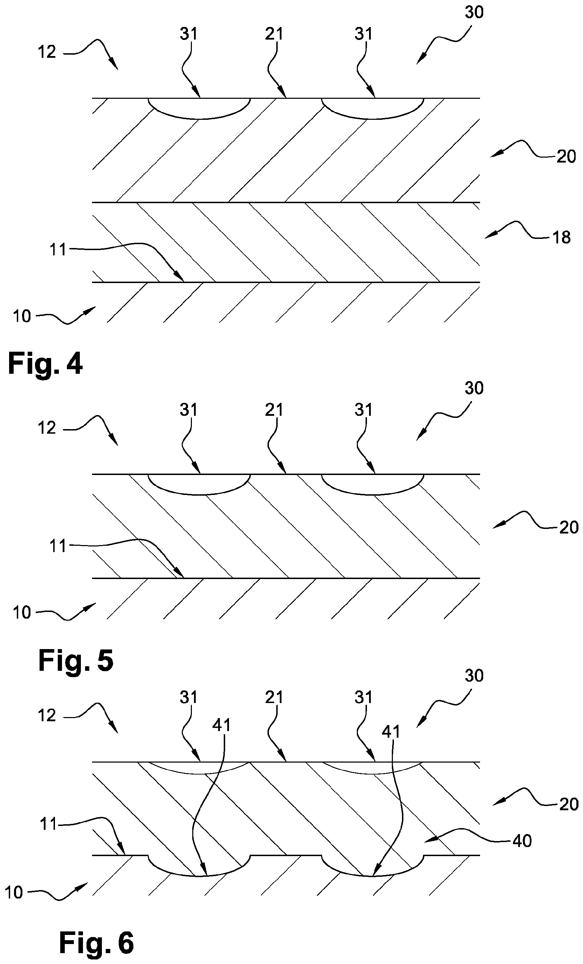

Comme montré à la figure 4, la microtexturation 30 est formée dans la couche de revêtement 20, de sorte que les microcavités 31 sont ouvertes au niveau de la surface 21 du revêtement 20.

Chacune des microcavités 31 présente des dimensions sensiblement égales, très légèrement différentes compte tenu de la précision du faisceau laser. Dans le cadre de l'invention, on considère que les microcavités 31 ont des dimensions similaires lorsque les variations dimensionnelles restent comprises entre le double (X2 = +100%) et la moitié (divisé par 2 = -50%) des dimensions moyennes des microcavités 31. A titre d'exemple, cette définition exclut les variations dimensionnelles de l'ordre de la décimale supérieure (X10 = +900%) ou inférieure (divisé par 10 = -90%).

Afin d'obtenir les performances recherchées, les microcavités 31 ont un diamètre compris entre 15 et 100 micromètres, et une profondeur comprise entre 50 nm et 100 µm. Lorsque les dimensions sont inférieures ou supérieures, le comportement tribologique de l'axe 10 dans le palier 4 n'est pas satisfaisant.

Avantageusement, chacune des microcavités 31 présente un rapport de forme inférieur ou égal à 1. Ce rapport de forme, défini comme le ratio entre la profondeur et la plus grande longueur, est un optimum pour réduire efficacement la vitesse d'usure du revêtement 20 anti-grippage sur l'axe 10 et l'usure du palier 4.

En outre, les microcavités 31 sont réparties sur la surface 11 avec une densité surfacique comprise entre 5 et 30%. Cette densité surfacique est définie comme le ratio de l'aire de la surface 11 couverte par les microcavités 31 sur l'aire totale de la surface 11.

En pratique, la sous-couche 18 est d'abord appliquée sur la surface 11, par exemple par pulvérisation cathodique magnétron réactive ou non réactive.

Ensuite, la couche de revêtement 20 est appliquée sur la couche 18, par exemple par dépôt sous vide selon un procédé PVD (Physical Vapour Déposition) ou PACVD (Plasma Assisted Chemical Vapour Déposition).

Enfin, la microtexturation 30 est réalisée de manière déterministe à la surface 21 du revêtement 20, selon un procédé LASER (Light Amplification by Stimulated Emission of Radiation), plus précisément dénommé ablation laser.

En alternative, la microtexturation 30 peut être réalisée de manière déterministe par réplication par déformation plastique (par exemple avec un outillage présentant les motifs positifs de la microtexturation à réaliser), par traitement chimique (avec une grille ou un masque), ou toute autre technique permettant d'obtenir les caractéristiques recherchées pour la microtexturation 30, en termes de forme, dimensions, densité et répartition.

Sur l'exemple des figures 1 à 4, la surface 11 est entièrement couverte par le revêtement 20 et la microtexturation 30. Autrement dit, la surface 11 entière est susceptible de constituer une zone de frottement 12 pourvue du revêtement 20 et de la microtexturation 30.

Une série d'essais a été réalisée sur un banc dédié aux axes de piston, conçu pour simuler le tribosystème axe de piston dans une bielle de vilebrequin d'un moteur thermique. Les essais présentent différentes configurations de matériaux et dimensionnements de microtexturations. Un protocole a été mis en place pour discriminer les différentes solutions testées.

Pour chaque essai, l'axe testé est en acier faiblement allié trempé dont la dureté de surface est de 635 HV. L'axe et le palier ont un diamètre de 25 mm, avec un jeu diamétral de 20±5 µm. La largeur du palier est de 19 mm. Le palier est muni d'une bague 5 antagoniste de l'axe 10.

Certains axes comportent un revêtement en carbone amorphe DLC de type hydrogéné a-C:H, présentant une épaisseur de 2 µm sur une sous-couche de nitrure de chrome de 0,7 µm d'épaisseur. D'autres axes comportent un revêtement en carbone amorphe DLC de type non hydrogéné ta-C, présentant une épaisseur de 0,7 µm sur une sous-couche de Cr d'environ 0,3 µm d'épaisseur. Le rapport de dureté du revêtement DLC a-C:H et de l'axe est de 3,5, tandis que le rapport de dureté du revêtement DLC ta-C et de l'axe est de 7.

La microtexturation est constituée de microcavités en forme de calottes, réalisées par laser femtoseconde.

Les essais sont réalisés dans un environnement chauffé à 180°C, sous une charge de 15 kN, soit une pression de Hertz appliquée de 37MPa, 45MPa et 52 MPa respectivement pour les antagonistes en aluminium, cuivreux et acier ou acier revêtu. La durée de chaque essai est de 4 heures.

Les essais sont détaillés dans les Tableaux 1, 2 et 3 ci-après.

Le Tableau 1 montre l'influence des matériaux des surfaces en contact. Plus précisément, il présente le rapport de dureté des matériaux, l'observation des surfaces et le cas échéant les dégradations des revêtements, l'usure de l'axe et/ou du palier. Les surfaces testées ne comportent pas de microtexturations. Le rapport de dureté défini par le ratio de la dureté du revêtement de l'axe et celle du palier varie de 1 à 20.

Les différentes configurations de matériaux non texturés présentent toute une non-conformité. Celle-ci peut être liée à une usure du revêtement sur l'axe, lorsque la dureté du revêtement Hv1 est au moins deux fois supérieure à celle de la surface du palier Hv2 (essais 1-3, 5). Pour un rapport de dureté Hv1/Hv2 inférieur ou égale à 1, un écaillage du revêtement sur l'axe et une usure du palier sur une profondeur de 15 µm rendent également cette configuration non-conforme (essai 4).

Ces exemples illustrent la problématique posée par les surfaces lisses et l'influence du rapport de dureté des antagonistes.

Le Tableau 2 montre l'influence de la densité de microtexturation sur l'axe revêtu, avec des rapports de dureté compris entre 5 et 16,7. Des microcavités de diamètre 50 µm et 500 nm de profondeur sont réalisées sur l'axe.

Les densités comprises entre 5 et 30% (essais 6 à 11, 14 à 17 et 19 à 22) montrent une usure très faible (<0,1 µm) au niveau du revêtement sur l'axe, ce qui illustre l'effet avantageux obtenu selon l'invention. En parallèle, l'usure n'est pas mesurable sur le palier. Les microtexturations des essais 6 à 11, 14 à 17 et 19 à 22 permettent donc une protection de l'axe revêtu, sans induire de dégradation des paliers, indépendamment de la nature du matériau constituant le palier.

Par contre, pour une densité supérieure à 30% (essais 12, 13, 18 et 23), une usure importante est observée sur le palier, de sorte que ces configurations sont classées comme non conformes.

Le Tableau 3 montre l'influence des paramètres dimensionnels de la microtexturation, c'est-à-dire la taille (plus grande longueur) et la profondeur des microcavités.

Les essais 24-32, réalisés avec des microtexturations dont la plus grande des dimensions varie de 50 à 90 µm, pour des profondeurs de 500 nm à 50 µm, sont conformes aux critères de l'invention. Pour ces essais, une usure très faible (<0,1 µm) est mesurée au niveau du revêtement sur l'axe.

Les essais 33 et 34, réalisés avec des tailles de microtexturations supérieures à 100 µm sur la plus grande dimension, permettent d'observer une usure du revêtement sur l'axe est notée pour les essais 33 et 34, ce qui les rend non conforme à l'invention.

L'essai 36 est réalisé avec la texturation macroscopique décrit dans le brevet FR2974399. Il montre une non-conformité due à une usure du palier de 4 µm et de l'axe d'au moins 0,2 µm. La texture décrite dans ce document ne remplit pas les critères recherchés dans l'invention, à savoir une protection contre l'usure du revêtement de l'axe et du palier.

Légende des désignations des colonnes dans les tableaux de résultats :
A Numéro de l'essai
B Nature du revêtement sur l'axe
C Nature de la bague antagoniste
D Rapport de dureté Hv1/Hv2
   - Hv1 : dureté du revêtement de surface anti-grippage de l'axe
   - Hv2 : dureté du palier antagoniste à l'axe
E Type de texturation
F Densité de textures (%)
G Dimensions des textures (µm)
H Profondeur (µm)
I Facteur de forme
J Usure de l'axe
K Usure de la bague
L Conformité (C) ou non-conformité (NC)
M Cause de non-conformité

**Tableau 1 - Effet des matériaux et de leur dureté sur l'usure de l'axe et du palier**

| **A** | **B** | **C** | **D** | **E** | **F** | **G** | **H** | **I** | **J** | **K** | **L** | **M** |
|---|---|---|---|---|---|---|---|---|---|---|---|---|
| 1 | a-C:H | Cuivreux | 8,3 | Pas de textures | 0% | 0 | 0 | 0 | 2,2 µm | non mesurable | NC | usure dépôt sur l'axe |
| 2 | a-C:H | Aluminium | 20 | Pas de textures | 0% | 0 | 0 | 0 | 2,0 µm | non mesurable | NC | usure dépôt sur l'axe |
| 3 | a-C:H | Acier | 5 | Pas de textures | 0% | 0 | 0 | 0 | 2,1 µm | non mesurable | NC | usure dépôt sur l'axe |
| 4 | a-C:H | a-C:H | 1 | Pas de textures | 0% | 0 | 0 | 0 | non mesurable | 15 µm | NC | écaillage dépôt sur l'axe + usure palier |
| 5 | ta-C | Cuivreux | 16,7 | Pas de textures | 0% | 0 | 0 | 0 | 0,8 µm | non mesurable | NC | usure dépôt sur l'axe |

**Tableau 2 - Effet de la densité de micro-texturation sur l'usure de l'axe et du palier**

| **A** | **B** | **C** | **D** | **E** | **F** | **G** | **H** | **I** | **J** | **K** | **L** | **M** |
|---|---|---|---|---|---|---|---|---|---|---|---|---|
| 6 | a-C:H | Cuivreux | 8,3 | Microcavités | 5% | 50 | 0,5 | 0,01 | <0,1 µm | non mesurable | C | RAS |
| 7 | a-C:H | Cuivreux | 8,3 | Microcavités | 8% | 50 | 0,5 | 0,01 | <0,1 µm | non mesurable | C | RAS |
| 8 | a-C:H | Cuivreux | 8,3 | Microcavités | 10% | 50 | 0,5 | 0,01 | <0,1 µm | non mesurable | C | RAS |
| 9 | a-C:H | Cuivreux | 8,3 | Microcavités | 15% | 50 | 0,5 | 0,01 | <0,1 µm | non mesurable | C | RAS |
| 10 | a-C:H | Cuivreux | 8,3 | Microcavités | 20% | 50 | 0,5 | 0,01 | <0,1 µm | non mesurable | C | RAS |
| 11 | a-C:H | Cuivreux | 8,3 | Microcavités | 30% | 50 | 0,5 | 0,01 | <0,1 µm | non mesurable | C | RAS |
| 12 | a-C:H | Cuivreux | 8,3 | Microcavités | 35% | 50 | 0,5 | 0,01 | <0,1 µm | 5 µm | NC | usure palier |
| 13 | a-C:H | Cuivreux | 8,3 | Microcavités | 40% | 50 | 0,5 | 0,01 | <0,1 µm | 8 µm | NC | usure palier |
| 14 | a-C:H | Acier | 5 | Microcavités | 5% | 50 | 0,5 | 0,01 | <0,1 µm | non mesurable | C | RAS |
| 15 | a-C:H | Acier | 5 | Microcavités | 10% | 50 | 0,5 | 0,01 | <0,1 µm | non mesurable | C | RAS |
| 16 | a-C:H | Acier | 5 | Microcavités | 20% | 50 | 0,5 | 0,01 | <0,1 µm | non mesurable | C | RAS |
| 17 | a-C:H | Acier | 5 | Microcavités | 30% | 50 | 0,5 | 0,01 | <0,1 µm | non mesurable | C | RAS |
| 18 | a-C:H | Acier | 5 | Microcavités | 40% | 50 | 0,5 | 0,01 | <0,1 µm | 2 µm | NC | usure palier |
| 19 | ta-C | Cuivreux | 16,7 | Microcavités | 5% | 50 | 0,5 | 0,01 | <0,1 µm | non mesurable | C | RAS |
| 20 | ta-C | Cuivreux | 16,7 | Microcavités | 10% | 50 | 0,5 | 0,01 | <0,1 µm | non mesurable | C | RAS |
| 21 | ta-C | Cuivreux | 16,7 | Microcavités | 20% | 50 | 0,5 | 0,01 | <0,1 µm | non mesurable | C | RAS |
| 22 | ta-C | Cuivreux | 16,7 | Microcavités | 30% | 50 | 0,5 | 0,01 | <0,1 µm | non mesurable | C | RAS |
| 23 | ta-C | Cuivreux | 16,7 | Microcavités | 40% | 50 | 0,5 | 0,01 | <0,1 µm | 15 µm | NC | usure palier |

**Tableau 3 - Effet des dimensions de la micro-texturation sur l'usure de l'axe et du palier**

| **A** | **B** | **C** | **D** | **E** | **F** | **G** | **H** | **I** | **J** | **K** | **L** | **M** |
|---|---|---|---|---|---|---|---|---|---|---|---|---|
| 24 | a-C:H | Cuivreux | 8,3 | Microcavités | 10% | 50 | 0,5 | 0,01 | <0,1 µm | non mesurable | C | RAS |
| 25 | a-C:H | Cuivreux | 8,3 | Microcavités | 10% | 50 | 5 | 0,1 | <0,1 µm | non mesurable | C | RAS |
| 26 | a-C:H | Cuivreux | 8,3 | Microcavités | 10% | 50 | 10 | 0,2 | <0,1 µm | non mesurable | C | RAS |
| 27 | a-C:H | Cuivreux | 8,3 | Microcavités | 10% | 50 | 20 | 0,4 | <0,1 µm | non mesurable | C | RAS |
| 28 | a-C:H | Cuivreux | 8,3 | Microcavités | 10% | 50 | 30 | 0,6 | <0,1 µm | non mesurable | C | RAS |
| 29 | a-C:H | Acier | 5 | Microcavités | 10% | 50 | 10 | 0,2 | <0,1 µm | non mesurable | C | RAS |
| 30 | ta-C | Cuivreux | 16,7 | Microcavités | 10% | 50 | 10 | 0,2 | <0,1 µm | non mesurable | C | RAS |
| 31 | a-C:H | Cuivreux | 8,3 | Microcavités | 10% | 90 | 0,5 | 0,006 | <0,1 µm | non mesurable | C | RAS |
| 32 | a-C:H | Cuivreux | 8,3 | Microcavités | 10% | 90 | 50 | 0,556 | <0,1 µm | non mesurable | C | RAS |
| 33 | a-C:H | Cuivreux | 8,3 | Microcavités | 10% | 150 | 0,5 | 0,003 | 1,3 µm | non mesurable | NC | usure du dépôt sur l'axe |
| 34 | a-C:H | Cuivreux | 8,3 | Microcavités | 10% | 150 | 5 | 0,033 | 1,4 µm | non mesurable | NC | usure du dépôt sur l'axe |
| 35 | a-C:H | Cuivreux | 8,3 | Microcavités | 10% | 50 | 0,05 | 0,001 | <0,1 µm | non mesurable | C | RAS |
| 36 | a-C:H | Cuivreux | 8,3 | Texturation en hélice | 10% | 450 | 250 | 0,56 | 0,2 µm | 4µm | NC | usure palier |

D'autres modes de réalisation d'un axe 10 équipant un système mécanique 1 conforme à l'invention sont montrés aux figures 5 à 18. Certains éléments constitutifs de l'axe 10 sont comparables à ceux du premier mode de réalisation décrit plus haut et, dans un but de simplification, portent les mêmes références numériques.

La figure 5 montre un axe 10 dépourvu de sous-couche interposée entre la surface 11 et le revêtement 20.

La figure 6 montre un axe 10 pour lequel l'étape de microtexturation est réalisée avant l'étape de revêtement. Une première microtexturation 40 constituée de microcavités 41 est réalisée sur la surface 11 de l'axe 10. La couche mince de revêtement 20 est ensuite appliquée sur la surface 11, de sorte que la surface 21 du revêtement présente la microtexturation 30 constituée par les microcavités 31, qui sont situées au-dessus des microcavités 41 et présentent sensiblement la même géométrie. Plus précisément, après application du revêtement 20, les microcavités 31 résultantes présentent globalement la même forme, avec des dimensions très légèrement différentes compte tenu de l'application du revêtement 20, en comparaison avec les microcavités 41 initiales.

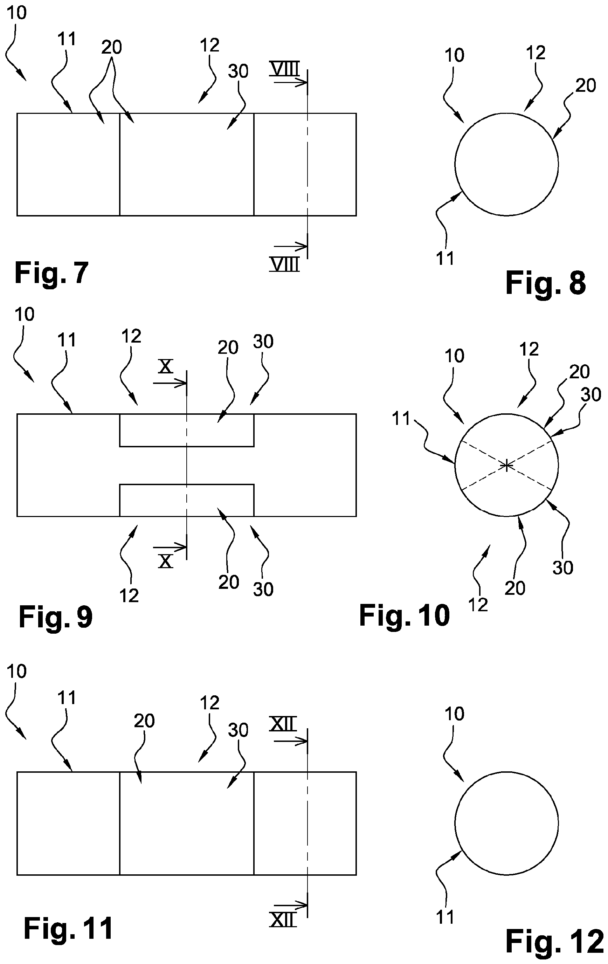

Les figures 7 et 8 montrent un axe 10 dont la surface 11 est entièrement couverte par le revêtement 20, tandis que la microtexturation 30 est réalisée uniquement dans une zone 12 centrale de la surface 11. En pratique, l'interface de contact entre l'axe 10 et l'alésage 6 est localisée dans cette zone 12. Ainsi, il est possible de réduire la durée et le coût de fabrication de l'axe 10 en limitant la microtexturation 30 à cette zone 12.

Les figures 9 et 10 montrent un axe 10 comportant deux zones 12 distinctes traitées selon l'invention. Les zones 12 sont situées en partie centrale de l'axe 10, sur deux secteurs angulaires opposés. Chacune des zones 12 est pourvue du revêtement 20 et de la microtexturation 30, tandis que le reste de la surface 11 ne reçoit pas les traitements 20 et 30, mais peut recevoir d'autres traitements. Par exemple, chaque secteur angulaire peut s'étendre sur un angle compris entre 15° et 160°. En alternative, l'axe 10 peut comporter une unique zone 12, s'étendant par exemple sur un secteur angulaire compris entre 15° et 240°.

Les figures 11 et 12 montrent un axe 10 pour lequel les traitements 20 et 30 sont réalisés uniquement dans une zone 12 centrale, tandis que le reste de la surface 11 ne reçoit pas les traitements 20 et 30, mais peut recevoir d'autres traitements.

Dans le cadre de la présente invention, on définit une « zone 12 » comme une surface de l'axe 10 couverte à la fois par le revêtement 20 et la microtexturation 30. Le revêtement 20 peut s'étendre au-delà de ladite zone 12. De même, la microtexturation 30 peut s'étendre au-delà de ladite zone 12.

De préférence, la zone 12 correspond à une zone de frottement entre l'axe 10 et le palier 4. La zone 12 peut s'étendre au-delà de la zone de frottement, de manière plus ou moins prononcée. La zone 12 peut également correspondre à une partie seulement de la zone de frottement. Dans ce cas, le reste de la zone de frottement pourrait être couvert uniquement avec le revêtement 20, ou uniquement avec la microtexturation 30, ou ne pas être modifié du tout.

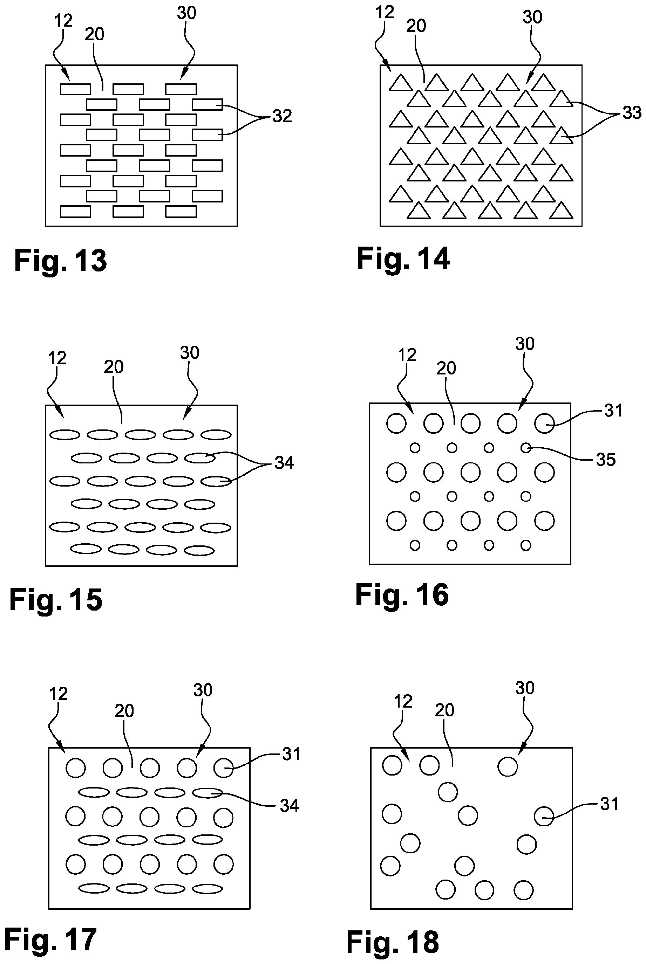

La figure 13 montre une microtexturation 30 constituée de microcavités 32 en forme de stries allongées, de section rectangulaire.

La figure 14 montre une microtexturation 30 constituée de microcavités 33 de section triangulaire.

La figure 15 montre une microtexturation 30 constituée de microcavités 34 de section elliptique.

La figure 16 montre une microtexturation 30 constituée de microcavités 31 et 35 de deux types différents. Les microcavités 31 et 35 présentent des sections circulaires, mais le diamètre des microcavités 31 est supérieur au diamètre des microcavités 35. Les microcavités 31 et 34 présentent des dimensions différentes.

Dans le cadre de l'invention, on considère que les microcavités 35 du second type ont des dimensions différentes lorsque leurs dimensions sont supérieures au double (X2 = +100%) ou inférieures à la moitié (divisé par 2 = -50%) des dimensions moyennes des microcavités 31 du premier type. Dans le cas présent, le diamètre des microcavités 35 est inférieur à la moitié du diamètre des microcavités 31.

La figure 17 montre une microtexturation 30 constituée de microcavités 31 et 34 de deux types différents. Les microcavités 31 présentent une section circulaire, tandis que les microcavités 34 présentent une section elliptique. Les microcavités 31 et 34 présentent des formes différentes.

Sur les figures 16 et 17, les microcavités de types différents sont réparties en alternance selon des rangées régulières. En variante, les microcavités de types différents peuvent être réparties de manière déterministe selon d'autres motifs géométriques

La figure 18 montre une micro-texturation 30 constituée de microcavités 31 réparties aléatoirement, et non selon un motif prédéterminé. A titre d'exemple non limitatif, un tel motif aléatoire peut être obtenu par un procédé de grenaillage maîtrisé ("shotpeening" en anglais).

Sur les figures 16 et 17, les microcavités de types différents sont réparties en alternance selon des rangées régulières. En variante, les microcavités de types différents peuvent être réparties de manière déterministe selon d'autres motifs, ou réparties de manière aléatoire comme sur la figure 18.

Quel que soit le mode de réalisation, le système mécanique 1 est destiné à fonctionner sous des pressions de contact moyennes inférieures à 200 MPa à l'interface entre le palier 4 et l'axe 10, lequel comporte au moins une zone 12 pourvue, d'une part, d'un revêtement de surface 20 anti-grippage, présentant une dureté de surface au moins deux fois supérieure à la dureté de la surface 11 de l'axe 10 et, d'autre part, d'une microtexturation 30 constituée par un ensemble de microcavités séparées, réparties de manière discontinue dans ladite zone 12.

En pratique, le système mécanique 1 peut être conformé différemment des figures 1 à 18 sans sortir du cadre de l'invention défini par les revendications.

Par ailleurs, les caractéristiques techniques des différents modes de réalisation et variantes mentionnés ci-dessus peuvent être, en totalité ou pour certaines d'entre elles, combinées entre elles dans le cadre de l'invention défini par les revendications.

Ainsi, le système mécanique 1 et le procédé de fabrication peuvent être adapté en termes de coût, de fonctionnalités et de performance.

## Revendications

1. Système mécanique (1), comprenant un palier (4) et un axe (10) couplé au palier (4), équipant un moteur thermique, ledit système mécanique étant soumis à des pressions de contact moyennes inférieures à 200 MPa, **caractérisé en ce que** l'axe (10) comporte au moins une zone (12) pourvue :
- d'un revêtement de surface (20) anti-grippage, présentant une dureté de surface au moins deux fois supérieure à celle du palier (4), et
- d'une microtexturation (30) constituée par un ensemble de microcavités (31, 32, 33, 34, 35) séparées, réparties dans ladite zone (12).

2. Système mécanique (1) selon la revendication 1, **caractérisé en ce que** le revêtement de surface (20) anti-grippage de l'axe (10) présente une dureté de surface au moins trois fois supérieure à celle du palier (4).

3. Système mécanique (1) selon la revendication 2, **caractérisé en ce que** le revêtement de surface (20) anti-grippage de l'axe (10) présente une dureté de surface au moins six fois supérieure à celle du palier (4).

4. Système mécanique (1) selon l'une quelconque des revendications 1 à 3, chacune des microcavités (31, 32, 33, 34, 35) présente une plus grande longueur comprise entre 15 et 100 micromètres, et une profondeur comprise entre 50 nm et 100 µm.

5. Système mécanique (1) selon la revendication 4, **caractérisé en ce que** chacune des microcavités (31, 32, 33, 34, 35) présente un rapport de forme inférieur ou égal à 1, défini comme le ratio entre la profondeur et la plus grande longueur.

6. Système mécanique (1) selon l'une quelconque des revendications 1 à 5, **caractérisé en ce que** les microcavités (31, 32, 33, 34, 35) sont réparties dans ladite zone (12) avec une densité surfacique comprise entre 5 et 30%, cette densité surfacique étant définie comme le ratio de l'aire totale couverte par les microcavités (31, 32, 33, 34, 35) sur l'aire totale de ladite zone (12) incluant ces microcavités (31, 32, 33, 34, 35).

7. Système mécanique (1) selon l'une quelconque des revendications 1 à 6, **caractérisé en ce que** les microcavités (31, 32, 33, 34, 35) sont réparties dans ladite zone (12) selon un motif prédéterminé de manière à former un réseau rectangulaire, carré, triangulaire ou hexagonal de microcavités en surface, avec des espacements entre le centre d'une microcavité et les centres des microcavités voisines au sein d'un même motif qui sont compris entre 1 et 10 fois la valeur d'une des dimensions longitudinales des microcavités.

8. Système mécanique (1) selon l'une quelconque des revendications 1 à 7, **caractérisé en ce que** l'axe (10) a une surface (11) externe cylindrique entièrement couverte par le revêtement de surface (20) et la microtexturation (30).

9. Système mécanique (1) selon l'une quelconque des revendications 1 à 7, **caractérisé en ce que** l'axe (10) a une surface (11) externe cylindrique comprenant une unique zone (12) localisée couverte par le revêtement de surface (20) et la microtexturation (30), cette zone (12) couvrant au moins partiellement la portion de surface (11) destinée à être sollicitée en frottement contre le palier (4).

10. Système mécanique (1) selon l'une quelconque des revendications 1 à 7, **caractérisé en ce que** l'axe (10) a une surface (11) externe cylindrique comprenant plusieurs zones (12) distinctes couvertes par le revêtement de surface (20) et la microtexturation (30), ces zones (12) couvrant au moins partiellement la portion de surface (11) destinée à être sollicitée en frottement contre le palier (4).

11. Procédé de fabrication d'un système mécanique (1) selon l'une des revendications 1 à 10, **caractérisé en ce qu'**il comprend :
- une étape de revêtement de l'axe (10), consistant à appliquer le revêtement de surface (20) anti-grippage dans ladite zone (12) de l'axe (10), et
- une étape de microtexturation de l'axe (10), consistant à former l'ensemble de microcavités (31, 32, 33, 34) dans ladite zone (12) de l'axe (10).

12. Procédé selon la revendication 11, **caractérisé en ce que** l'étape de revêtement est réalisée avant l'étape de microtexturation.

13. Procédé selon la revendication 11, **caractérisé en ce que** l'étape de microtexturation est réalisée avant l'étape de revêtement.

14. Procédé selon l'une quelconque des revendications 11 à 13, **caractérisé en ce que** l'étape de microtexturation est réalisée avec une installation de microtexturation conservant un paramétrage constant.

15. Procédé selon l'une quelconque des revendications 11 à 13, **caractérisé en ce que** l'étape de microtexturation est réalisée avec une installation de microtexturation réglée successivement avec deux paramétrages différents, ou est réalisée successivement avec deux installations de microtexturation présentant des paramétrages différents, de manière à ce que l'ensemble de microcavités (31, 32, 33, 34, 35) comprend au moins : un premier type de microcavités (31) et un second type de microcavités (34 ; 35) ayant des géométries différentes.

## Patentansprüche

1. Mechanisches System (1), mit einem Lager (4) und einer an das Lager (4) gekoppelten Achse (10), zur Ausrüstung eines Verbrennungsmotors, wobei auf dieses mechanische System ein Kontaktdruck von durchschnittlich weniger als 200 MPa ausgeübt wird, **dadurch gekennzeichnet, dass** die Achse (10) mindestens eine Zone (12) enthält, ausgerüstet mit
- einer rutschfesten Oberflächenbeschichtung (20), mit einer Oberflächenhärte, die mindestens zwei Mal höher ist als die des Lagers (4), und einer
- Mikrotextur (30) bestehend aus zahlreichen getrennten Mikrovertiefungen (31, 32, 33, 34, 35), die in dieser Zone (12) verteilt sind.

2. Mechanisches System (1) nach Anspruch 1, **dadurch gekennzeichnet, dass** die rutschfeste Oberflächenbeschichtung (20) der Achse (10) eine Oberflächenhärte aufweist, die mindestens drei Mal höher ist, als die des Lagers (4).

3. Mechanisches System (1) nach Anspruch 2, **dadurch gekennzeichnet, dass** die rutschfeste Oberflächenbeschichtung (20) der Achse (10) eine Oberflächenhärte aufweist, die mindestens sechs Mal höher ist, als die des Lagers (4).

4. Mechanisches System (1) nach einem der Ansprüche 1 bis 3, wobei jede der Mikrovertiefungen (31, 32, 33, 34, 35) eine größere Länge zwischen 15 und 100 Mikrometern aufweist und eine Tiefe zwischen 50 nm und 100 µm.

5. Mechanisches System (1) nach Anspruch 4, **dadurch gekennzeichnet, dass** jede der Mikrovertiefungen (31, 32, 33, 34, 35) ein Formverhältnis kleiner oder gleich 1 aufweist, definiert als Verhältnis zwischen der Tiefe und der größten Länge.

6. Mechanisches System (1) nach einem der Ansprüche 1 bis 5, **dadurch gekennzeichnet, dass** die Mikrovertiefungen (31, 32, 33, 34, 35) in der erwähnten Zone (12) mit einer Flächendichte zwischen 5 und 30 % verteilt sind, diese Flächendichte ist dabei definiert als das Verhältnis der gesamten, von den Mikrovertiefungen (31, 32, 33, 34, 35) bedeckten Fläche zur Gesamtfläche dieser Zone (12) einschließlich der Mikrovertiefungen (31, 32, 33, 34, 35).

7. Mechanisches System (1) nach einem der Ansprüche 1 bis 6, **dadurch gekennzeichnet, dass** die Mikrovertiefungen (31, 32, 33, 34, 35) in dieser Zone (12) gemäß einem vorher festgelegten Muster verteilt sind, so dass sie ein rechteckiges, quadratisches, dreieckiges oder hexagonales Netz an Mikrovertiefungen auf der Oberfläche bilden, mit Abständen zwischen dem Zentrum einer Mikrovertiefung und den Zentren der benachbarten Mikrovertiefungen innerhalb desselben Musters, die zwischen dem 1 und 10-fachen des Wertes eines der Längsmäße der Mikrovertiefungen betragen.

8. Mechanisches System (1) nach einem der Ansprüche 1 bis 7, **dadurch gekennzeichnet, dass** die Achse (10) eine externe zylindrische Fläche (11) aufweist, die vollständig von der Oberflächenbeschichtung (20) und der Mikrotextur (30) bedeckt ist..

9. Mechanisches System (1) nach einem der Ansprüche 1 bis 7, **dadurch gekennzeichnet, dass** die Achse (10) eine externe zylindrische Fläche (11) aufweist, die eine einzige, lokal begrenzte Zone (12) enthält, die von der Oberflächenbeschichtung (20) und der Mikrotextur (30) bedeckt ist, wobei diese Zone (12) zumindest teilweise den Oberflächenabschnitt (11) bedeckt, der durch Reibung gegen das Lager (4) beansprucht wird.

10. Mechanisches System (1) nach einem der Ansprüche 1 bis 7, **dadurch gekennzeichnet, dass** die Achse (10) eine externe zylindrische Fläche (11) aufweist, die mehrere unterschiedliche Zonen (12) enthält, die von der Oberflächenbeschichtung (20) und der Mikrotextur (30) bedeckt sind, wobei diese Zonen (12) zumindest teilweise den Oberflächenabschnitt (11) bedecken, der durch Reibung gegen das Lager (4) beansprucht wird.

11. Verfahren zur Herstellung eines mechanischen Systems (1) nach einem der Ansprüche 1 bis 10, **dadurch gekennzeichnet, dass** es :
- einen Schritt der Beschichtung der Achse (10), der darin besteht, die rutschfeste Oberflächenbeschichtung (20) in dieser Zone (12) der Achse (10) aufzutragen, und
- einen Schritt der Mikrotexturierung der Achse (10), der darin besteht, alle Mikrovertiefungen (31, 32, 33, 34) in dieser Zone (12) der Achse (10) zu bilden, enthält.

12. Verfahren nach Anspruch 11, **dadurch gekennzeichnet, dass** der Schritt der Beschichtung vor dem Schritt der Mikrotexturierung ausgeführt wird.

13. Verfahren nach Anspruch 11, **dadurch gekennzeichnet, dass** der Schritt der Mikrotexturierung vor dem Schritt der Beschichtung ausgeführt wird.

14. Verfahren nach einem der Ansprüche 11 bis 13, **dadurch gekennzeichnet, dass** der Schritt der Mikrotexturierung mit einer Mikrotexturierungsanlage ausgeführt wird, die eine konstante Parametrierung wahrt.

15. Verfahren nach einem der Ansprüche 11 bis 13, **dadurch gekennzeichnet, dass** der Schritt der Mikrotexturierung mit einer Mikrotexturierungsanlage ausgeführt wird, die nacheinander mit zwei unterschiedlichen Parametrierungen gesteuert wird, oder er nacheinander mit zwei Mikrotexturierungsanlagen ausgeführt wird, die unterschiedliche Parametrierungen aufweisen, so dass die Mikrovertiefungen (31, 32, 33, 34, 35) insgesamt mindestens enthalten: einen ersten Typ Mikrovertiefungen (31) und einen zweiten Typ Mikrovertiefungen (34, 35) mit unterschiedlichen Geometrien.

## Claims

1. A mechanical system (1) comprising a bearing (4) and a shaft (10) coupled to the bearing (4), equipping an internal combustion engine, said mechanical system being subjected to mean contact pressures less than 200 MPa, **characterized in that** the shaft (10) comprises at least one area (12) provided with:
- an anti-seizure surface coating (20), having a surface hardness at least twice that of the bearing (4), and
- a microtexturing (30) formed by a set of separated microcavities (31, 32, 33, 34, 35), distributed within said area (12).

2. A mechanical system (1) according to claim 1, **characterized in that** the anti-seizure surface coating (20) of the shaft (10) has a surface hardness at least three times that of the bearing (4).

3. A mechanical system (1) according to claim 2, **characterized in that** the anti-seizure surface coating (20) of the shaft (10) has a surface hardness at least six times that of the bearing (4).

4. A mechanical system (1) according to any one of claims 1 to 3, each of the microcavities (31, 32, 33, 34, 35) has a greater length of between 15 and 100 micrometers, and a depth of between 50 nm and 100 µm.

5. A mechanical system (1) according to claim 4, **characterized in that** each of the microcavities (31, 32, 33, 34, 35) has a form ratio less than or equal to 1, defined as the ratio between the depth and the greatest length.

6. A mechanical system (1) according to any one of claims 1 to 5, **characterized in that** the microcavities (31, 32, 33, 34, 35) are distributed within said area (12) with a surface density of between 5 and 30%, that surface density being defined as the ratio of the total area covered by the microcavities (31, 32, 33, 34, 35) to the total area of said area (12) including those microcavities (31, 32, 33, 34, 35).

7. A mechanical system (1) according to any one of claims 1 to 6, **characterized in that** the microcavities (31, 32, 33, 34, 35) are distributed within said area (12) in a predetermined pattern so as to form a rectangular, square, triangular, or hexagonal network of microcavities on the surface, with spacing between the center of a microcavity and the centers of neighboring microcavities within a single pattern that are between 1 and 10 times the value of one of the longitudinal dimensions of the microcavities.

8. A mechanical system (1) according to any one of claims 1 to 7, **characterized in that** the shaft (10) has a cylindrical outer surface (11) fully covered by the surface coating (20) and the microtexturing (30).

9. A mechanical system (1) according to any one of claims 1 to 7, **characterized in that** the shaft (10) has a cylindrical outer surface (11) comprising a single localized area (12) covered by the surface coating (20) and the microtexturing (30), that area (12) at least partially covering the portion of the surface (11) intended to rub against the bearing (4).

10. A mechanical system (1) according to any one of claims 1 to 7, **characterized in that** the shaft (10) has a cylindrical outer surface (11) comprising several distinct areas (12) covered by the surface coating (20) and the microtexturing (30), those areas (12) at least partially covering the portion of the surface (11) intended to rub against the bearing (4).

11. A method for manufacturing a mechanical system (1) according to any one of claims 1 to 10, **characterized in that** it comprises:
- a step of coating the shaft (10), consisting in applying the anti-seizure surface coating (20) within said area (12) of the shaft (10), and
- a step of microtexturing the shaft (10), consisting in forming all of the microcavities (31, 32, 33, 34) within said area (12) of the shaft (10).

12. A method according to claim 11, **characterized in that** the coating step is carried out before the microtexturing step.

13. A method according to claim 11, **characterized in that** the microtexturing step is carried out before the coating step.

14. A method according to any one of claims 11 to 13, **characterized in that** the microtexturing step is carried out with a microtexturing installation maintaining constant settings.

15. A method according to any one of claims 11 to 13, **characterized in that** the microtexturing step is carried out with a microtexturing installation successively configured with two different settings, or is successively carried out with two microtexturing installations having different settings, so that all of the microcavities (31, 32, 33, 34, 35) comprise at least: a first type of microcavities (31) and a second type of microcavities (34; 35) having different geometries.
